# FASCICULE DE BREVET EUROPEEN

(11) **EP 2 065 609 B1**
(45) Date de publication et mention de la délivrance du brevet: **09.06.2010**
(21) Numéro de dépôt: 08165902.1
(22) Date de dépôt: 06.10.2008
(51) Int. Cl.: F16D 65/06

(54) **Dispositif de freinage pour matériel roulant ferroviaire**
Bremsvorrichtung für Schienenfahrzeuge
Braking device for railway rolling stock

(30) Priorité: 29.11.2007 FR 0708342
(43) Date de publication de la demande: 03.06.2009
(73) Titulaire: AFE Metal, 42110 Feurs (FR)
(72) Inventeur: Flachat, Jacques c/o NOVAGRAAF TECHNOLOGIES, 25000, BESANCON (FR)
(74) Mandataire: Gendron, Vincent Christian

(56) Documents cités:
- US-A- 2 051 909
- US-A- 5 647 460
- US-B1- 6 336 532

## Description

La présente invention concerne un dispositif de freinage pour matériel roulant ferroviaire notamment train ou tramway. Un tel dispositif est connu du document US-B-6 336 532.

Il s'agit d'un dispositif du type constitué par un porte-semelle relié d'une part à un châssis du train ou du tramway, par l'intermédiaire d'un système d'actionnement, et supportant d'autre part, dans une zone opposée, une semelle de freinage, dite également patin d'usure, destinée à venir en contact avec la jante d'une roue à freiner du véhicule ferroviaire.

La semelle de freinage est constituée en un matériau composite ou encore en fonte.

Il est connu d'assurer la liaison de la semelle de freinage avec le porte-semelle par un pontet métallique solidaire du dos de ladite semelle, destiné à coopérer avec un logement sensiblement correspondant réalisé à partir de la face inférieure du porte-semelle. De cette manière, on peut mettre en coïncidence des lumières latérales débouchantes ménagées dans le logement de celui-ci, situées en vis-à-vis avec des lumières latérales également débouchantes et en vis-à-vis du pontet, mises en coïncidence avec celles du porte-semelle, pour permettre l'engagement latéral d'une clavette de verrouillage.

Ce type de dispositif de freinage est de longue date utilisé sur le matériel ferroviaire roulant, mais l'augmentation progressive de la vitesse des trains a pour effet de créer des vibrations importantes au niveau de la semelle et de la roue, et plus particulièrement entre le porte-semelle et la semelle, ayant pour effet néfaste de provoquer à terme la désolidarisation de ladite semelle avec le porte-semelle.

L'étude du phénomène a permis de constater que ces vibrations étaient dues essentiellement au fait que l'assemblage de la semelle, par l'intermédiaire de son pontet, avec le porte-semelle, par l'intermédiaire du logement correspondant réalisé dans celui-ci, s'effectuait métal sur métal.

Le phénomène était d'autant plus accentué que les éléments précités étaient montés entre eux avec jeu.

Le problème à résoudre consiste donc à supprimer le jeu trop important au niveau du pontet, et conséquemment les vibrations en résultant, et cela plus particulièrement pour les trains à grande vitesse circulant à plus de 300 km/h.

Il a pu être constaté également que dans de telles conditions extrêmes, il y avait un risque de perte de la semelle, ce qui peut bien entendu avoir des conséquences très graves, et de ce fait un contrôle périodique, tous les quinze jours, est devenu indispensable pour éviter ce risque.

La présente invention a pour but de remédier à l'ensemble de ces inconvénients en proposant une solution simple et efficace.

Elle concerne à cet effet un dispositif de freinage pour matériel roulant ferroviaire du type constitué par un porte-semelle relié, d'une part, à un châssis par l'intermédiaire d'un système d'actionnement et supportant, d'autre part, dans une zone opposée, une semelle de freinage destinée à venir en contact avec la jante d'une roue à freiner, et en liaison avec le porte-semelle par un pontet métallique solidaire du dos de ladite semelle, destiné à coopérer avec un logement sensiblement correspondant réalisé à partir de la face inférieure du porte-semelle, de manière à mettre en coïncidence des lumières latérales débouchantes ménagées dans le logement de celui-ci, situées en vis-à-vis avec des lumières latérales également débouchantes et en vis-à-vis du pontet, mises en coïncidence avec celles du porte-semelle, pour permettre l'engagement latéral d'une clavette de verrouillage, caractérisé en ce qu'un élément d'amortissement des vibrations, de forme complémentaire à celle intérieure du logement du porte-semelle et extérieure du pontet de la semelle, est interposé entre lesdits logement et pontet.

Un tel système permet donc, selon le but recherché, de compenser le jeu théorique entre les pièces métalliques et réduire ainsi les déplacements verticaux en fonctionnement, ainsi les risques de désolidarisation de la semelle lors du fonctionnement.

L'avantage du système selon l'invention tient également au fait que la semelle puisse demeurer un élément standard car elle ne subit aucune modification due à l'invention.

On peut trouver une application de ce système à tous dispositifs de freinage à semelle amovible pour le freinage de véhicules de chemin de fer ou de tramway.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:

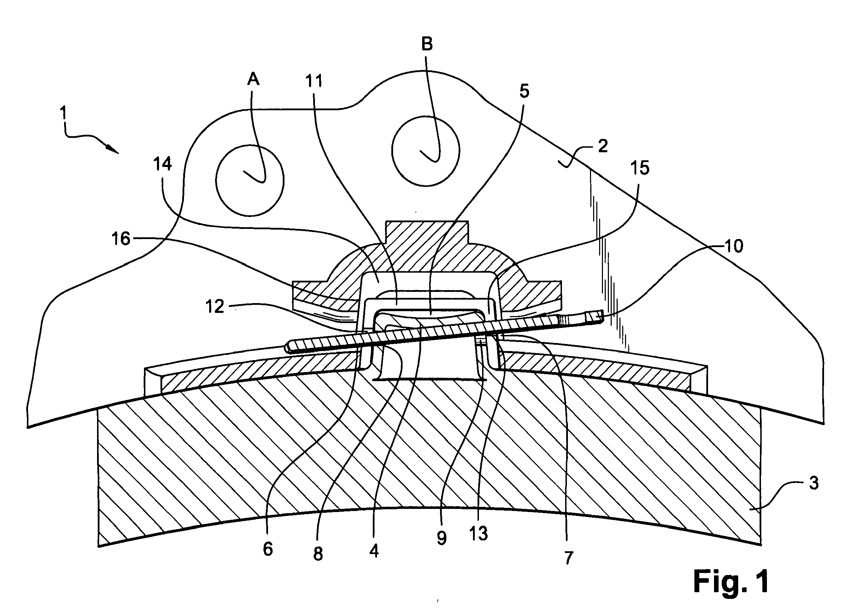

La figure 1 est une vue en plan et en coupe longitudinale du dispositif de freinage selon l'invention.

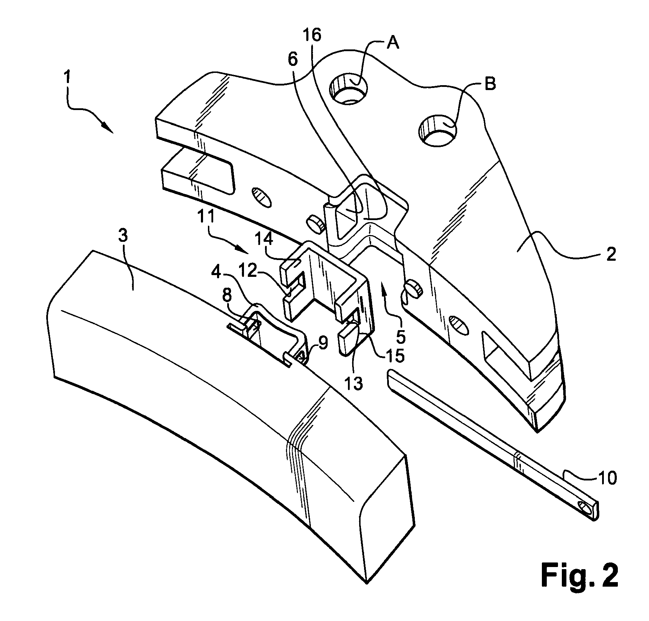

La figure 2 est une vue en perspective éclatée du dispositif de freinage selon la figure 1.

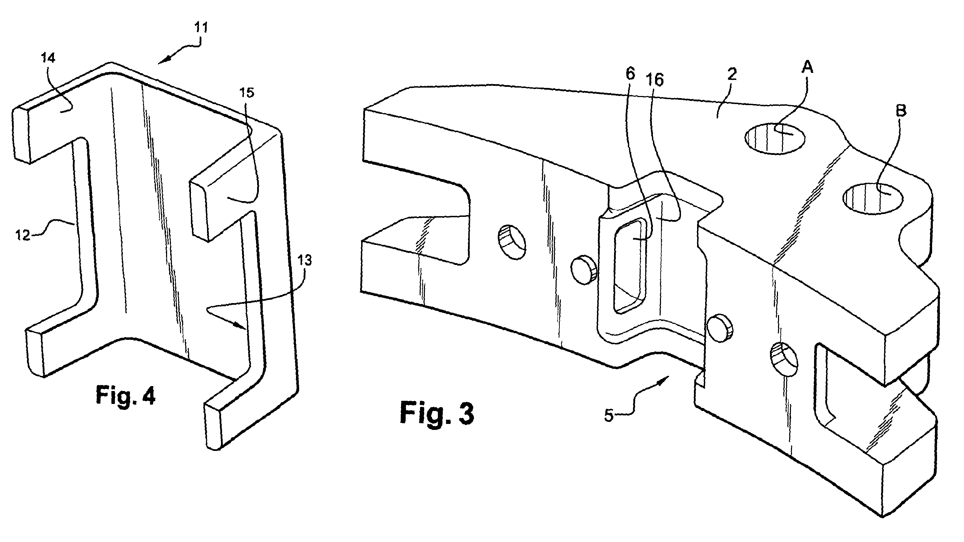

La figure 3 est une vue en perspective du porte-semelle seul.
La figure 4 est une vue en perspective de l'élément d'amortissement destiné à être interposé entre le porte-semelle et la semelle, selon l'invention.

Le dispositif de freinage 1 globalement désigné sur les figures est destiné à un matériel roulant ferroviaire du type constitué par un porte-semelle 2 relié, d'une part, à un châssis par l'intermédiaire d'un système d'actionnement et supportant, d'autre part, dans une zone opposée, une semelle de freinage 3 destinée à venir en contact avec la jante d'une roue à freiner.

La semelle 3 est en liaison avec le porte-semelle 2 par un pontet métallique 4 solidaire du dos de ladite semelle 3, destiné à coopérer avec un logement sensiblement correspondant 5 réalisé à partir de la face inférieure du porte-semelle 2, de manière à mettre en coïncidence des lumières latérales débouchantes 6,7 ménagées dans le logement 5 de celui-ci, situées en vis-à-vis avec des lumières latérales 8,9 également débouchantes et en vis-à-vis du pontet 4, mises en coïncidence avec celles du porte-semelle 2, lors du montage, pour permettre l'engagement latéral d'une clavette de verrouillage 10.

Le porte-semelle 2 comporte des trous « A »,« B » permettant la fixation du dispositif de freinage, constitué par le porte-semelle 2 et la semelle 3, au châssis du train ou du tramway, par l'intermédiaire du système d'actionnement (non représenté).

Selon l'invention, un élément 11 d'amortissement des vibrations, de forme complémentaire à celles intérieure du logement 5 du porte-semelle 2 et extérieure du pontet 4 de la semelle 3, est interposé entre lesdits logements 5 et pontet 4.

Plus précisément, l'élément 11 d'amortissement des vibrations est en forme de U, pour s'adapter à des profils correspondants du pontet 4 de la semelle 3 et du logement 5 du porte-semelle 2 entre lesquels il s'intercale, en permettant le passage de la clavette 10 par l'intermédiaire d'évidements 12,13 réalisés sur les branches 14,15 du U, pour venir en coïncidence avec les lumières 6,7 du porte-semelle 2 d'une part, et avec les lumières 8,9 du pontet 4 de la semelle 3 d'autre part, lors du montage.

Selon une autre caractéristique de l'invention, le logement 5 du porte-semelle 2 comporte, au moins sur ses faces latérales internes, des zones d'encastrement 16 réalisées en creux sur celles-ci, autour de ses lumières 6,7 de passage de clavette 10, destinées à recevoir et positionner les branches latérales 14,15 de l'élément d'amortissement en U 11, de contour sensiblement correspondant.

Dans certains cas, l'élément d'amortissement 11 comporte, sur sa partie centrale interne, une zone évidée longitudinale permettant le passage de la clavette lors du montage.

D'une manière générale, l'élément d'amortissement 11 est réalisé dans un matériau élastiquement déformable, préférentiellement un élastomère.

Mais bien entendu, l'élément d'amortissement 11 peut également être obtenu par moulage d'une matière plastique.

Quoi qu'il en soit, le matériau constitutif de l'élément d'amortissement 11 est de nature à supporter des températures au-delà de 200°C.

## Revendications

1. Dispositif de freinage (1) pour matériel roulant ferroviaire du type constitué par un porte-semelle (2) relié, d'une part, à un châssis par l'intermédiaire d'un système d'actionnement et supportant, d'autre part, dans une zone opposée, une semelle de freinage (3) destinée à venir en contact avec la jante d'une roue à freiner, et en liaison avec le porte-semelle (2) par un pontet métallique (4) solidaire du dos de ladite semelle (3), destiné à coopérer avec un logement sensiblement correspondant (5) réalisé à partir de la face inférieure du porte-semelle (2), de manière à mettre en coïncidence des lumières latérales débouchantes (6,7) ménagées dans le logement (5) de celui-ci, situées en vis-à-vis avec des lumières latérales (8,9) également débouchantes et en vis-à-vis du pontet (4), mises en coïncidence avec celles du porte-semelle (2), lors du montage, pour permettre l'engagement latéral d'une clavette de verrouillage (10), **caractérisé en ce qu'**un élément (11) d'amortissement des vibrations, de forme complémentaire à celles intérieure du logement (5) du porte-semelle (2) et extérieure du pontet (4) de la semelle (3), est interposé entre lesdits logement (5) et pontet (4).

2. Dispositif de freinage selon la revendication 1, **caractérisé en ce que** l'élément (11) d'amortissement des vibrations est en forme de U, pour s'adapter à des profils correspondants du pontet (4) de la semelle (3) et du logement (5) du porte-semelle (2) entre lesquels il s'intercale, en permettant le passage de la clavette (10) par l'intermédiaire d'évidements (12,13) réalisés sur les branches (14,15) du U, pour venir en coïncidence avec les lumières (6,7) du porte-semelle (2) d'une part, et avec les lumières (8,9) du pontet (4) de la semelle (3) d'autre part, lors du montage.

3. Dispositif de freinage selon la revendication 2, **caractérisé en ce que** le logement (5) du porte-semelle (2) comporte, au moins sur ses faces latérales internes, des zones d'encastrement (16) réalisées en creux sur celles-ci, autour de ses lumières (6,7) de passage de clavette (10), destinées à recevoir et positionner les branches latérales (14,15) de l'élément d'amortissement en U (11), de contour sensiblement correspondant.

4. Dispositif de freinage selon l'une des revendications 1 à 3, **caractérisé en ce que** l'élément d'amortissement (11) comporte, sur sa partie centrale interne, une zone évidée longitudinale permettant le passage de la clavette lors du montage.

5. Dispositif de freinage selon l'une des revendications 1 à 4, **caractérisé en ce que** l'élément d'amortissement (11) est réalisé dans un matériau élastiquement déformable.

6. Dispositif de freinage selon la revendication 5, **caractérisé en ce que** l'élément d'amortissement (11) est réalisé en élastomère.

7. Dispositif de freinage selon la revendication 5, **caractérisé en ce que** l'élément d'amortissement (11) est obtenu par moulage d'une matière plastique.

8. Dispositif de freinage selon l'une des revendications 5 à 7, **caractérisé en ce que** le matériau constitutif (11) de l'élément d'amortissement est de nature à supporter des températures au-delà de 200°C.

## Claims

1. Braking device (1) for railway rolling stock of the type consisting of a shoe holder (2) connected, on the one hand, to a chassis by means of an actuating system and supporting, on the other hand, in an opposite region, a brake shoe (3) intended to come into contact with the rim of a wheel to be braked, and in connection with the shoe holder (2) by a metal bridge (4) secured to the back of said shoe (3), intended to cooperate with a substantially corresponding housing (5) produced from the lower face of the shoe holder (2), so as to place in coincidence lateral through openings (6, 7) formed in the housing (5) thereof, which are situated opposite lateral openings (8, 9), which are likewise through openings, and opposite the bridge (4), which are placed in coincidence with the openings of the shoe holder (2), during mounting, in order to allow the lateral engagement of a locking key (10), **characterized in that** a vibration damping element (11), with a shape complementary to the inner shape of the housing (5) of the shoe holder (2) and outer shape of the bridge (4) of the shoe (3), is interposed between said housing (5) and bridge (4).

2. Braking device according to Claim 1, **characterized in that** the vibration damping element (11) is of U shape in order to adapt to corresponding profiles of the bridge (4) of the shoe (3) and of the housing (5) of the shoe holder (2) between which it is inserted, allowing the passage of the key (10) via cutouts (12, 13) produced on the branches (14, 15) of the U, in order to come into coincidence with the openings (6, 7) of the shoe holder (2) on the one hand, and with the openings (8, 9) of the bridge (4) of the shoe (3) on the other hand, during mounting.

3. Braking device according to Claim 2, **characterized in that** the housing (5) of the shoe holder (2) comprises, at least on its inner lateral faces, embedding regions (16) produced as a recess on the latter, around its openings (6, 7) for the passage of the key (10), which are intended to receive and position the lateral branches (14, 15) of the U-shaped damping element (11) of substantially corresponding contour.

4. Braking device according to one of Claims 1 to 3, **characterized in that** the damping element (11) comprises, on its inner central part, a longitudinal hollowed-out region allowing the passage of the key during mounting.

5. Braking device according to one of Claims 1 to 4, **characterized in that** the damping element (11) is produced from an elastically deformable material.

6. Braking device according to Claim 5, **characterized in that** the damping element (11) is made of elastomer.

7. Braking device according to Claim 5, **characterized in that** the damping element (11) is obtained by moulding a plastic.

8. Braking device according to one of Claims 5 to 7, **characterized in that** the material (11) constituting the damping element is capable of withstanding temperatures beyond 200°C.

## Patentansprüche

1. Bremsvorrichtung (1) für ein Schienenfahrzeug des Typs, welcher durch eine Tragauflage (2) gebildet ist, die zum Einen über ein Betätigungssystem mit einem Chassis verbunden ist und zum Anderen an einem gegenüberliegenden Bereich eine Bremsauflage (3) hält, welche dazu ausgelegt ist, mit der Felge eines zu bremsenden Rades in Kontakt zu kommen, und mit der Tragauflage (2) über einen mit der Rückseite der Bremsauflage (3) fest verbundenen Metallbügel (4) verbunden ist, welcher dazu ausgelegt ist, mit einer im Wesentlichen passenden Aufnahme (5) zusammenzuwirken, die von der Unterseite der Tragauflage (2) ausgebildet ist, so dass die in der Aufnahme (5) des Metallbügels eingebrachten, seitlichen, freien Öffnungen (6, 7) bei der Montage in Übereinstimmung kommen und den seitlichen, ebenfalls freien Öffnungen (8, 9) des Bügels (4) gegenüberliegen, welche in Übereinstimmung mit den Öffnungen der Tragauflage (2) gebracht sind, um den seitlichen Eingriff eines Verschlusskeils (10) zu ermöglichen, **dadurch gekennzeichnet, dass** ein Dämpfungsteil (11) zur Innenseite der Aufnahme (5) der Tragauflage (2) und zur Außenseite des Bügels (4) der Bremsauflage (3) formkomplementär ist und zwischen der Aufnahme (5) und dem Bügel (4) angeordnet ist.

2. Bremsvorrichtung nach Anspruch 1, **dadurch gekennzeichnet, dass** das Dämpfungsteil (11) eine U-Form hat, um sich an die entsprechenden Profile des Bügels (4), der Bremsauflage (3) und des Aufnahmeraums (5) der Tragauflage (2) anzupassen, zwischen denen es sitzt, wodurch der Durchgang des Keils (10) via die auf den Schenkeln (14, 15) der U-Form gebildeten Aussparungen (12, 13) ermöglicht wird, um während der Montage in Übereinstimmung einerseits mit den Öffnungen (6, 7) der Tragauflage (2) und andererseits mit den Öffnungen (8, 9) des Bügels (4) der Bremsauflage (3) zu kommen.

3. Bremsvorrichtung nach Anspruch 2, **dadurch gekennzeichnet, dass** die Aufnahme (5) der Tragauflage (2) zumindest auf Ihren inneren Seitenflächen Montagebereiche (16) umfasst, welche um deren Durchgangsöffnungen (6, 7) für den Keil (10) als Vertiefung auf den inneren Seitenflächen gebildet sind zum Aufnehmen und Positionieren der seitlichen Schenkel (14, 15) des U-förmigen, eine im Wesentlichen passende Kontur aufweisenden Dämpfungselementes (11).

4. Bremsvorrichtung nach einem der Ansprüche 1 bis 3, **dadurch gekennzeichnet, dass** das Dämpfungselement (11) auf seinem inneren Zentralbereich eine langgestreckte Aussparung aufweist, die den Durchgang des Keils während der Montage ermöglicht.

5. Bremsvorrichtung nach einem der Ansprüche 1 bis 4, **dadurch gekennzeichnet, dass** das Dämpfungselement (11) aus einem elastisch verformbaren Material gebildet ist.

6. Bremsvorrichtung nach Anspruch 5, **dadurch gekennzeichnet, dass** das Dämpfungselement (11) als Elastomer ausgebildet ist.

7. Bremsvorrichtung nach Anspruch 5, **dadurch gekennzeichnet, dass** das Dämpfungselement (11) durch Formguss eines Plastikwerkstoffes erlangt wird.

8. Bremsvorrichtung nach einem der Ansprüche 5 bis 7, **dadurch gekennzeichnet, dass** das Material (11) des Dämpfungselementes dazu geeignet ist, Temperaturen von über 200°C standzuhalten.
